# EUROPÄISCHE PATENTANMELDUNG

(11) **EP 4 428 502 A1**
(43) Veröffentlichungstag der Anmeldung: **11.09.2024**
(21) Anmeldenummer: 23160584.1
(22) Anmeldetag: 07.03.2023
(51) Int. Cl.: G01F 23/284, G01S 13/88, H01Q 1/22, H01Q 13/02, H01P 11/00

(54) **HOHLLEITER BESTEHEND AUS ZWEI HALBSCHALEN**

(71) Anmelder: VEGA Grieshaber KG, 77709 Wolfach (DE)
(72) Erfinder: Weinzierle, Christian, 77709 Wolfach (DE); Wälde, Steffen, 78078 Niedereschach (DE); Bader, Tobias, 77716 Haslach (DE)
(74) Vertreter: Patentanwälte Bauer Vorberg Kayser

(57) **Zusammenfassung**

Die vorliegende Erfindung beschreibt ein Radarmessgerät mit einem einer Hochfrequenzeinheit zur Erzeugung und/oder zum Empfang von elektromagnetischen Wellen mit einer Antenne zur gerichteten Abstrahlung der elektromagnetischen Wellen, wobei zwischen der Hochfrequenzeinheit und der Antenne ein Hohlleiter zur Übertragung der elektronmagnetischen Wellen angeordnet ist, dadurch gekennzeichnet, dass der Hohlleiter aus zwei sich in Längsrichtung des Hohlleiters erstreckenden Halbschalen besteht.

## Beschreibung

Die vorliegende Erfindung betrifft ein Radarmessgerät gemäß dem Oberbegriff des Patentanspruchs 1.

Aus dem Stand der Technik sind verschiedene Radarmessanordnungen, Radarmessgeräte und -verfahren bekannt. Bspw. werden Radarmessanordnungen und Radarmessgeräte im Stand der Technik in der Prozessautomatisierung zur Füllstandmessung oder allgemeiner zur Abstandsmessung eingesetzt. Um auch bewegte Objekte erkennen zu können, wird im Stand der Technik neben einer Abstandsbestimmung in einer separaten Messung auch eine Geschwindigkeitsbestimmung durchgeführt. Dies kann entweder mit dem gleichen Radarsensor, oder mit einem zusätzlichen Radarsensor erfolgen.

Aufgrund weitreichender Unabhängigkeit gegenüber äußeren Einflüssen und durch die Erschließung höherer Arbeitsfrequenzen mit Hilfe neuartiger Halbleiterbauelemente können mit modernen Radarmessgeräten sehr exakte Messergebnisse zuverlässig ermittelt werden. Bekannte Radarfüllstandmessgeräte messen den Abstand zu einem Füllgut und anderen Reflexionsstellen, nachfolgend auch Reflektoren genannt, innerhalb eines Behälters durch Anwendung eines Puls-Laufzeit-Verfahrens oder eines FMCW-Verfahrens (FMCW = Frequency Modulated Continous Wave).

Bei Anwendungen im Bereich der Automatisierungstechnik werden bislang hauptsächlich optische Verfahren und Messanordnungen verwendet.

Unter dem Begriff Automatisierungstechnik wird ein Teilgebiet der Technik verstanden, welches alle Maßnahmen zum Betrieb von Maschinen und Anlagen ohne Mitwirkung des Menschen beinhaltet, so kann das Teilgebiet der Prozessautomatisierung als niedrigster Grad der Automatisierung verstanden werden. Ziel der Prozessautomatisierung ist es, das Zusammenspiel einzelner Komponenten einer Werksanlage in den Bereichen Chemie, Erdöl, Papier, Zement, Schifffahrt oder Bergbau zu automatisieren. Hierzu sind eine Vielzahl an Sensoren bekannt, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Durchfluss, Druck oder Dichte überwacht und Einstellungen für die gesamte Werksanlage manuell oder automatisiert verändert werden können.

Ein anderes Teilgebiet der Automatisierungstechnik betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Bekannte Radarsysteme sind bislang nicht in der Lage, die Anforderungen hierbei zu erfüllen, weshalb im bekannten Stand der Technik unterschiedliche Sensoren auf Basis optischer Messverfahren mittels Laser, LED, 2D-Kameras oder 3D-Kameras, die nach dem Laufzeitprinzip (time off light, ToF) Abstände erfassen, verwendet werden.

Ein drittes Teilgebiet der Automatisierungstechnik betrifft die Fabrikautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar. Üblicherweise werden daher auch im Bereich der Fabrikautomation im großen Stil Sensoren auf Basis optischer Messverfahren eingesetzt.

Sowohl im Bereich der Logistikautomation, als auch im Bereich der Fabrikautomation und der Sicherheitstechnik dominieren bislang optische Sensoren. Diese sind schnell und preisgünstig und können die Lage und/oder den Abstand zu einem Objekt aufgrund der relativ einfach fokussierbaren optischen Strahlung, welche der Messung zu Grunde liegt, zuverlässig ermitteln. Ein bedeutender Nachteil optischer Sensoren ist aber deren erhöhter Wartungsbedarf, da auch in den zuvor aufgezählten Bereichen nach einigen tausend Betriebsstunden ein Verschmutzen des Sensors zu beobachten ist, welche die Messung massiv beeinträchtigt. Zudem kann speziell beim Einsatz in Fertigungslinien die Messung durch Öldämpfe oder andere Aerosole mit Nebelbildung beeinträchtigt werden, und zu einer zusätzlichen Verschmutzung optischer Sensoren führen.

In der Prozessindustrie und insbesondere in der Prozessautomatisierung werden Radarmessgeräte und insbesondere Radarfüllstandmessgeräte unter rauen Bedingungen, wie hohe und tiefe Temperaturen sowie unter extremen Drücken, in staubigen Umgebungen und aggressiven Medien zuverlässig eingesetzt.

Zunächst etablierten sich Radarmessgeräte im C-Band auf dem Markt, die im Frequenzbereich um 6 GHz arbeiten und laut Regulierungsbehörden zugelassen werden dürfen. Diese Geräte haben den Nachteil einer großen Bauform, da die Antennengröße abhängig von der verwendeten Wellenlänge ist. Es wurden daher Radarmessgeräte im K-Band entwickelt. Das K-Band bezeichnet den Frequenzbereich um 25 GHz. Die dadurch erzielbaren Antennengrößen sind gegenüber den für das C-Band notwendigen Antennen deutlich reduziert. Seit 2016 sind erste Radarmessgeräte, und vorliegend insbesondere ein Radarfüllstandmessgerät für Flüssigkeiten, verfügbar, die im W-Band, also dem Frequenzbereich um 80 GHz, arbeiten. Auf diese Weise können sehr kompakte Antennenbauformen realisiert werden, die auch kleine Prozessanschlüsse zur Anordnung der Radarmessgeräte in einer Prozessumgebung erlauben.

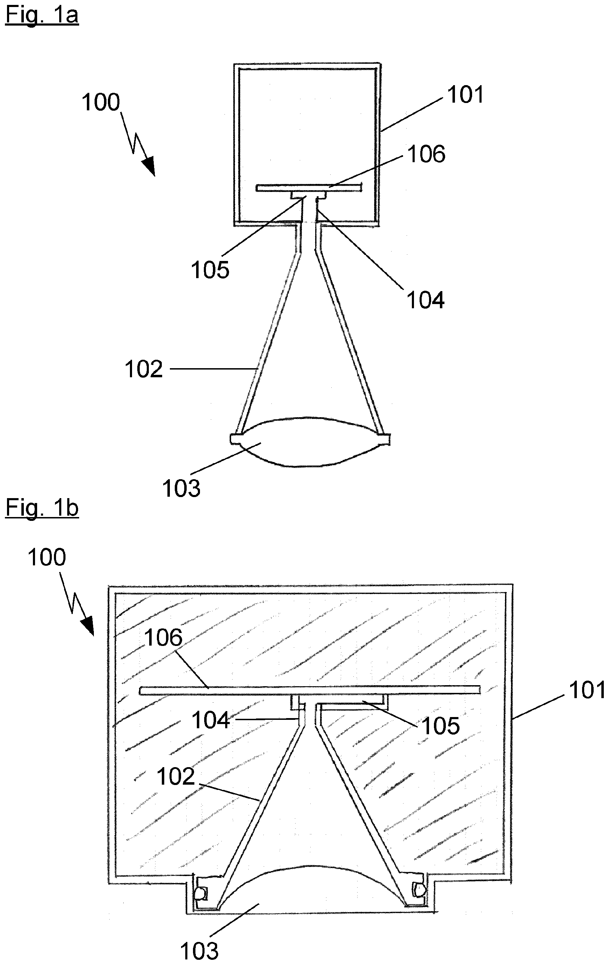

Ein aus dem Stand der Technik bekanntes Radarmessgerät 100, hier ein Radarfüllstandmessgerät ist in Figur 1a dargestellt.

Das in Figur 1a gezeigte Radarfüllstandmessgerät 100 weist im Wesentlichen ein Gehäuse 101 auf. Eine in dem Gehäuse 101 angeordnete Elektronik weist eine Leiterplatte 106 mit einer auf der Leiterplatte 106 angeordneten Hochfrequenzeinheit (HF-Einheit) 105 mit einem Radarchip auf. Die Hochfrequenzeinheit 105 enthält bspw. Sender und Empfänger für Hochfrequenzsignale im gewünschten Frequenzband.

Gemäß der vorliegenden Anmeldung wird unter einer Hochfrequenzeinheit der Teil eines Radarmessgeräts verstanden, der Hochfrequenzsignale erzeugt, sendet und empfängt.

Bei dem in Figur 1a gezeigten Radarfüllstandmessgerät 100 ist die HF-Einheit 105 über einen Hohlleiter 104 mit einer Hornantenne 102 gekoppelt, an deren in Hauptabstrahlrichtung vorderen Ende eine dielektrische Linse 103 angeordnet ist. Der Hohlleiter 104 dient dazu, die von der HF-Einheit 105 ausgesendeten Hochfrequenzsignale möglichst verlustfrei von der HF-Einheit 105 zu einem Einspeisepunkt der Hornantenne 102 zu führen und umgekehrt, von der Hornantenne 102 empfangene Hochfrequenzsignale zu der HF-Einheit 105 zu führen.

Eine Länge der Hornantenne 102 ist maßgeblich für die Abstrahleigenschaften der Hornantenne 102 verantwortlich und muss über Berechnungen und Simulationen so ausgelegt werden, dass sämtliche relevanten Zulassungsaspekte erfüllt werden. Insbesondere sind hier definierte Öffnungswinkel und die vorgeschriebene Nebenkeulenunterdrückung zu beachten. Die Linse 103 sitzt dabei vorderseitig in der Hornantenne 102 und ist so ausgestaltet, dass die geometrische Länge der Antenne im Vergleich zu einer Hornantenne 102 ohne Linse verkürzt ist. Im vorliegenden Ausführungsbeispiel ist eine konvex-konvexe oder bikonvexe Linse 103, d. h. eine Linse mit zwei nach außen gewölbten Flächen gezeigt. Auf diese Weise kann eine kompakte Bauform realisiert werden.

In Figur 1b ist eine weitere Ausgestaltung eines Radarfüllstandmessgeräts 100 gemäß dem Stand der Technik gezeigt, wobei im Vergleich zu der Ausgestaltung der Figur 1a die Linse 103 plan-konvex ausgestaltet ist, d. h. eine vorliegende zum Prozess orientierte Oberfläche der Linse 103 plan und eine in das Antennenhorn weisende Oberfläche der Linse 103 konvex ausgebildet ist.

Die Linsen 103 bieten neben einer kompakteren Antennenbauform zudem den Vorteil, dass diese als Trennung zum Prozess und zum Prozessmedium fungieren. Die auf der Leiterplatte 106 angeordnete Messelektronik und insbesondere die HF-Einheit 105 kann durch die Linse 103 vor hohen und tiefen Drücken und Temperaturen, Staub, Feuchtigkeit, und anderen für die Messelektronik negativen Umgebungsbedingungen geschützt werden.

Die Linsen 103 sind dabei häufig so ausgestaltet, dass sie neben guten Hochfrequenzeigenschaften weitere Eigenschaften aufweisen. Zu nennen sind hierbei beispielsweise Abtropfkegel oder Abtropfkanten, die so ausgestaltet sind, dass sich an der Linse 103 abscheidendes Kondensat in vorteilhafter Weise schnell abtropfen kann oder seitlich an der Antenne befindliches Regenwasser nicht direkt vor die Linse läuft.

Es ist möglich, dass sich die Hornantenne 102 außerhalb des Gerätegehäuses 101 befindet (siehe Figur 1a) oder auch innerhalb (siehe Figur 1b).

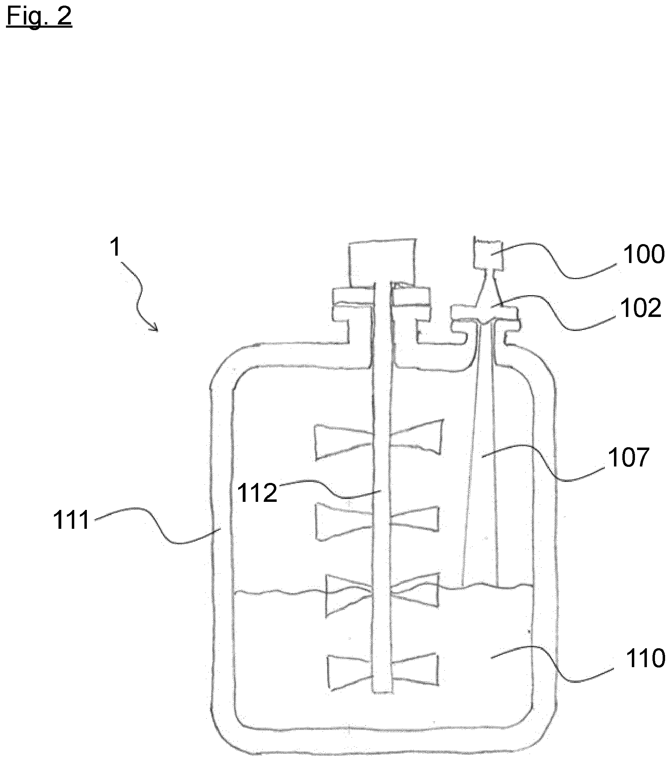

Figur 2 zeigt ein mögliches Einsatzszenario für Radarmessgeräte 100, wie sie in Zusammenhang mit den Figuren 1a und 1b beschrieben wurden, als Radarfüllstandmessgerät 100 in einen Behälter 111.

Moderne Füllstandmessgeräte sind seit Anfang der 1990er Jahre als Radarfüllstandmessgeräte 100 ausgeführt und verdrängen aufgrund ihrer positiven Eigenschaften zunehmen andere Messgeräte, die nach dem Ultraschallprinzip oder nach optischen Prinzipien arbeiten, vom Markt. Im Laufe der Jahre konnte durch das Fortschreiten der Halbleitertechnologie immer höhere Signalfrequenzen erzielt werden. Aus den ursprünglich um 6 GHz arbeitende Puls-Laufzeit-Radarmessgeräte konnten hierdurch zwischenzeitlich 80 GHz FMCW Radarsensoren entwickelt werden.

Die Erschließung höherer Frequenzbereiche hat zum Vorteil, dass kleinere Antennenbauformen (respektive größerer Antennengewinn bei gleicher Apertur) realisiert werden konnten, was in vielerlei Hinsicht Vorteile bringt.

Das in Figur 2 gezeigte Radarfüllstandmessgerät 100 ist über einen Flansch an dem Behälter 111 montiert, dessen Füllstand mit einem Füllgut 110 mittels des Radarfüllstandmessgeräts 100 bestimmt werden soll. Durch die eingesetzte Technologie beim Aufbau des Radarfüllstandmessgeräts 100 ist es möglich, dass ein Öffnungswinkel einer Hauptkeule 107 der Antennenrichtdiagramme so klein ist, dass Störreflektoren, z.B. ein in Figur 2 dargestelltes Rührwerk 112, selbst in schlanken, hohen Behältern 111 nicht mehr in den Sichtbereich des Radarfüllstandmessgeräts 100 fallen, d.h. dass die Radarstrahlung so gut fokussiert ist, dass bspw. zwischen einer Wandung des Behälters 111 und dem Rührwerk 112 hindurchgemessen werden kann. Weiterhin lassen sich bei höheren Frequenzbereichen sowohl technisch als auch funkregulatorisch größere Signalbandbreiten erzielen, was den Vorteil hat, dicht beieinander gelegene Echos besser voneinander trennen zu können.

Während die Antennen 102 in niedrigeren Frequenzbereichen um 6 und 24 GHz mit Koaxialkabeln gespeist werden können, geht man aufgrund der hohen Dämpfungseigenschaften dieser Kabel im Frequenzbereich um 80 GHz dazu über, zur Signalführung Hohlleiter 104 einzusetzen, wie dies bspw. in den Figuren 1a und 1b gezeigt ist. Hohlleiter 104 weisen in diesem Frequenzbereich eine sehr niedrige Dämpfung auf und können in ausreichender Länge kostengünstig hergestellt werden.

Als Antennen 102 werden häufig runde Hornantennen verwendet, die häufig eine dielektrische Füllung und/oder, wie in den Figuren 1a und 1b dargestellt, eine dielektrische Linse 103 aufweisen, um die Länge des Antennenhorns zu reduzieren.

Eine Herausforderung an die Prozessmesstechnik stellen hohe Prozesstemperaturen dar. Moderne Radarfüllstandmessgeräte 100 können mit Antennen 102 ausgestattet werden, die Prozesse mit Temperaturen bis zu 450°C messen können. Die Elektronik solcher Radarfüllstandmessgeräte 100 ist aber häufig nur bis 85°C spezifiziert. Das bedeutet, dass über die Antenne 102 und den zugehörigen Hohlleiter 104 bzw. die bei niedrigeren Frequenzen eingesetzten Koaxialkabel eine Temperaturentkopplung stattfinden muss. Diese wird im Stand der Technik über eine lange Antenne in Kombination mit einem langen Hohlleiter 104 bzw. einem Koaxialkabel teilweise in Kombination mit zusätzlichen Kühlrippen realisiert. Zur Auslegung der benötigten Länge kommen Temperatursimulationen und -messungen zum Einsatz.

Eine neue Generation von Füllstandmessgeräten soll nun die bereits bestehenden positiven Effekte, die mit einer Erhöhung der Sendefrequenz einher gehen, weiter ausnutzen. Durch eine weitere Erhöhung der Frequenz können bspw. bei Frequenzen um 180 GHz oder sogar 240 GHz die Antennen der Messgeräte noch kleiner ausgeführt werden, um vergleichbare Antennengewinne wie bei 80 GHz zu erzielen. Mit kleineren Antennen lassen sich neue Anwendungsfelder in kleineren Behältern oder in der Fabrikautomation abdecken und somit neue Märkte erschließen.

Für die angestrebten Frequenzbereiche ist die notwendige Halbleitertechnologie, insbesondere für die benötigten Hochfrequenzeinheiten, bereits kommerziell verfügbar und es sind auch internationale Bestrebungen zur Regulierung von Messgeräten, die in diesem hohen Frequenzbereich arbeiten, zu beobachten.

Für den gewünschten Einsatzzweck ist die im Stand der Technik verfügbare Aufbau- und Verbindungstechnik jedoch unzureichend.

Die Dämpfungseigenschaften von Koaxialkabeln sind in einem Frequenzbereich oberhalb von 60 GHz zu groß für den praktischen Einsatz in einem Füllstandmessgerät, bei dem die Antenne aufgrund der oben erwähnten Temperaturanforderungen weit von einer Sensorelektronik und damit der Hochfrequenzeinheit, entfernt angeordnet werden muss. Je länger derartige Leiter sind, desto höher ist die Signaldämpfung die das Signal während der Transmission erfährt.

Die für Radarfüllstandmessgeräte mit einer Sendefrequenz von 80 GHz verwendete Hohlleitertechnik stößt bei größer werdenden Frequenzen, insbesondere oberhalb von 110 GHz ebenfalls auf größer werdende Herausforderungen. Der Durchmesser eines Rundhohlleiters definiert den Frequenzbereich in dem der Hohlleiter betrieben werden kann. Bei einem Rechteckhohlleiter, d.h. einem Hohlleiter mit einem rechteckigen Querschnitt, ist die Kantenlänge der längeren Seite des Rechtecks für den Frequenzbereiche ausschlaggebend. Bei steigender Frequenz verringert sich der Durchmesser bzw. die Kantenlänge des Hohlleiters. Während bei einer Frequenz von 80 GHz noch einen Rundhohlleiterdurchmesser von 2,6 mm verwendet werden kann, beträgt der Durchmesser bei 240 GHz nur noch ca. 0,87 mm.

Die benötigte Länge solcher Hohlleiter kann aufgrund der oben beschriebenen Temperaturproblematik in einem Bereich 4 cm - 30 cm liegen. Rundhohlleiter werden häufig über ein (Tiefloch-)Bohrverfahren oder über Erodierverfahren hergestellt. Mittels dieser Bohrverfahren sind jedoch nur Bohrlöcher mit einer Tiefe von maximal ca. dem 30-fachen Bohrdurchmesser herstellbar, sofern die Randbedingungen mechanische Genauigkeit und Herstellkosten noch in einem angemessenen Rahmen bleiben sollen. Bohrverfahren haben im Vergleich zu Erodierverfahren den Vorteil, dass die Oberflächenrauheit im Hohlleiter sehr gering ist, was zur Erzielung einer geringen Dämpfung vorteilhaft ist.

Die Ursache für die zunehmende Dämpfung im Hohlleiter ist der Skin Effekt. Die Eindringtiefe der Ladungsträger in die Wände der Hohlleiter wird bei größer werdenden Frequenzen zunehmend kleiner. Dadurch wird die Oberflächenrauheit der metallischen Oberfläche innerhalb des Hohlleiterkanals mit steigernder Frequenz zunehmend relevanter. Je größer die Rauheit der Oberfläche ist, desto größer wird die Dämpfung des Hohlleiters. Bei steigender Frequenz verringert sich damit nicht nur, wie oben beschrieben, der Durchmesser des Hohlleiters, sondern es steigen auch die Anforderungen an die Güte der Oberfläche innerhalb des Hohlleiterkanals, also insbesondere an die Rauheit. Diese steigenden Anforderungen machen die Herstellung solcher Hohlleiter aufwändig und damit teuer.

Für sehr geringe Hohlleiterdurchmesser sind Tieflochbohrverfahren also nur für vergleichsweise geringe Längen des Hohleiters geeignet, um prozesstaugliche Rundhohlleiter herstellen zu können, da die benötigte Bohrtiefe nur mit äußerst großem Aufwand in ausreichender Genauigkeit erreicht werden kann.

Es ist daher die Aufgabe der vorliegenden Erfindung, ein Radarmessgerät, insbesondere ein Radarfüllstandmessgerät mit einem zwischen der Hochfrequenzeinheit und der Antenne angeordnetem Hohlleiter zur Verfügung zu stellen, das bei Frequenzen über 110 GHz betrieben werden kann und einen Abstand zwischen Hochfrequenzeinheit und von wenigstens 5 cm realisiert.

Ferner ist es eine Aufgabe der vorliegenden Erfindung, ein Herstellverfahren für einen Hohlleiter anzugeben, der geeignet ist, elektromagnetische Wellen mit Frequenzen über 110 GHz verlustarm zu führen, insbesondere zwischen einer Hochfrequenzeinheit und einer Antenne.

Diese Aufgaben werden durch ein Radarmessgerät mit den Merkmalen des Patentanspruchs 1 sowie durch ein Verfahren zum Herstellen eines Hohlleiters mit den Merkmalen des Patentanspruchs 17 gelöst.

Bevorzugte Ausführungsformen, Merkmale und Eigenschaften des vorschlagsgemäßen Radarmessgeräts entsprechen denjenigen des vorschlagsgemäßen Verfahrens und umgekehrt.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können in beliebiger, technisch sinnvoller Weise miteinander als auch mit den in der nachfolgenden Beschreibung näher erläuterten Merkmale kombiniert werden und andere vorteilhafte Ausführungsvarianten der Erfindung darstellen.

Ein erfindungsgemäßes Radarmessgerät mit einem einer Hochfrequenzeinheit zur Erzeugung und/oder zum Empfang von elektromagnetischen Wellen mit einer Antenne zur gerichteten Abstrahlung der elektromagnetischen Wellen, wobei zwischen der Hochfrequenzeinheit und der Antenne ein Hohlleiter zur Übertragung der elektronmagnetischen Wellen angeordnet ist, zeichnet sich dadurch aus, dass der Hohlleiter aus zwei sich in Längsrichtung des Hohlleiters erstreckenden Halbschalen besteht.

Dadurch dass der Hohlleiter aus zwei sich in Längsrichtung des Hohlleiters erstreckenden Halbschalen besteht, wird es möglich, Holleiter in annähernd beliebiger Länge herzustellen und in den Radarmessgeräten zu verwenden. Die Kavitäten, die den Hohlraum des Holleiters ausbilden können in den Halbschalen durch zerspanende Verfahren, Gussverfahren, bspw. Spritzguss oder Druckguss, Strangpressverfahren oder auf andere Weise erzeugt werden. Durch die vorgenannten Verfahren wird eine sehr präzise Fertigung der Halbschalen möglich.

Gemäß der vorliegenden Anmeldung wird unter einer Hochfrequenzeinheit der Teil eines Radarmessgeräts verstanden, der Hochfrequenzsignale erzeugt, sendet und empfängt.

Die Längsrichtung des Hohlleiters bezeichnet vorliegend die Erstreckungsrichtung des Hohlleiters von der Hochfrequenzeinheit zur Antenne.

Das Radarmessgerät kann insbesondere ein Radarfüllstandmessgerät sein. Es können aber auch andere Radarmessgeräte, bspw. zur Objekterkennung oder Radarschranken sowie Radarmessgeräte für die Fabrikautomation zur Messung von Abständen und Geschwindigkeiten von und zu Objekten den vorgeschlagenen Aufbau aufweisen.

In einer Ausgestaltungsform kann der Hohlleiter einen runden Querschnitt aufweisen. Ein runder Querschnitt bedeutet, dass der Hohlraum, in dem die elektromagnetische Strahlung geführt wird, einen runden, insbesondere kreisförmigen Querschnitt aufweist. Eine Außenkontur des Hohlleiters ist dabei aber nicht zwangsläufig so ausgestaltet, dass auch diese einen runden oder kreisförmigen Querschnitt aufweist.

Eine durch die Halbschalen des Hohlleiters definierte Trennebenen halbiert den Hohlleiter in Längsrichtung, d.h. die Trennebene verläuft durch eine Längsachse des Hohlraumes des Hohlleiters und teilt diesen in zwei Hälften. Bei einem Hohlleiter mit einem kreisförmigen Querschnitt bedeutet das, dass die beiden Halbschalen jeweils eine halbkreisförmige Kavität aufweisen, sodass nach einem Zusammenfügen der beiden Halbschalen ein Kanal mit kreisförmigen Querschnitt, also eine kreisförmige Kavität zur Führung der elektromagnetischen Wellen gebildet ist.

Der Hohlleiter kann alternativ einen rechteckigen Querschnitt aufweisen, wobei eine durch die Halbschalen definierte Trennebene parallel zu den kürzeren Seiten des Rechtecks ausgerichtet ist und die längeren Seiten vorzugsweise halbiert. Durch eine derartige Ausgestaltung wird erreicht, dass eine durch das Zusammenfügen der Halbschalen gebildete Schnittfläche möglichst wenig negative Einflüsse auf die Eigenschaften des Hohlleiters hat. In dieser Ebene sind die auftretenden Wandströme im Hohlleiter gleich Null, was bedeutet, dass ein Übergangswiderstand, der durch die Schnittflächen entstehen könnte, keine Auswirkung auf die Übertragungseigenschaften des Hohlleiters aufweist.

In einer vorteilhaften Ausgestaltung ist im Querschnitt des Rechteckhohlleiters eine Länge einer längeren Seite des Rechtecks kleiner als 2 mm, insbesondere kleiner als 1 mm, vorzugsweise 1,3mm oder 0,86 mm lang.

In einer vorteilhaften Weiterbildung weisen die Halbschalen Ausrichtelemente, insbesondere selbstzentrierende Ausrichtelemente auf. Solche Ausrichtelemente dienen dazu, die Halbschalen bei einem Montageprozess d. h. beim Zusammenfügen der Halbschalen zum Hohlleiter relativ zueinander auszurichten, sodass die in den Halbschalen ausgebildeten Kavitäten so zueinander ausgerichtet werden, dass sich der gewünschte Hohlleiterquerschnitt ohne Stufen oder Spalte im Übergangsbereich, d.h. an einer Stoßkante zwischen den Halbschalen, ergibt. Der Übergang zwischen den Halbschalen ist also vorzugsweise stufenfrei und spaltfrei ausgebildet. Die Ausrichtelemente können insbesondere so ausgestaltet sein, dass diese selbstzentrierend sind, d.h. dass die Ausrichtelemente so ausgestaltet sind, dass sie die beiden Halbschalen bspw. durch Anlaufkanten, Fasen oder dergleichen über eine Längserstreckung der Ausrichtelemente bei einem Zusammenführen der Halbschalen so zueinander ausrichten und positionieren, dass diese spalt- und stufenfrei ineinander übergehen.

In einer Ausgestaltungsform können die Ausrichtelemente ferner als Verbindungselemente zum Verbinden der Halbschalen ausgebildet sein. Das bedeutet, dass die Ausrichtelemente nicht nur eine Ausrichtung und Positionierung der Halbschalen zueinander gewährleisten, sondern gleichzeitig diese miteinander verbinden, insbesondere aneinander fixieren. Dies kann bspw. dadurch erfolgen, dass die Ausrichtelemente so ausgestaltet sind, dass diese so miteinander verrasten, verhaken oder verklemmen, sodass die beiden Halbschalen aneinander gehaltert, insbesondere fixiert werden.

Bspw. können die Ausricht- und Verbindungselemente durch Öffnungen und in die Öffnungen eingebrachte Stifte ausgestaltet sein, wobei bspw. die Öffnungen und/oder die Stifte einen Hinterschnitt aufweisen können, der so ausgestaltet ist, dass die Halbschalen in zusammengefügtem Zustand verrasten.

Alternativ zu einem Verrasten können die Stifte auch eingepresst sein, sodass diese durch einen Presssitz in den Öffnungen halten und die Halbschalen so verbunden sind.

In einer Variante können die Ausrichtelemente und/oder Verbindungselemente einstückig mit den Halbschalen ausgebildet sein. Das bedeutet, dass die Ausrichtund/oder Verbindungselemente bspw. bei der Herstellung der Halbschalen aus dem Material der Halbschalen hergestellt werden. Bspw. können die Ausrichtund/oder Verbindungselemente in einem Spritzguss- oder Druckgussverfahren bereits in dem jeweiligen Werkzeug mit ausgeformt werden, sodass diese in einem Arbeitsschritt mit den Halbschalen hergestellt werden können.

In einer Ausgestaltungsform sind die Ausricht- und bevorzugt auch Verbindungselemente als Öffnungen und zu den Öffnungen korrespondierend angeordnete Stifte ausgebildet. Die Stifte können entweder mit einer der Halbschalen gemeinsam ausgebildet sein und in Öffnungen der anderen Halbschale eingreifen, oder es weisen beide Halbschalen entsprechend ausgebildete Öffnungen auf, in die separat ausgebildete Stifte, die insbesondere Passstifte ausgebildet sein können, eingesetzt werden. Durch die Stifte kann so bspw. eine Presspassung erreicht werden. Die Stifte werden dafür in die Öffnungen eingepresst und gewährleisten auf diese Weise gleichzeitig eine Ausrichtung der Halbschalen zueinander sowie eine Befestigung der Halbschalen aneinander.

Es sei an dieser Stelle angemerkt, dass die Ausrichtelemente und die Verbindungselemente zwar bevorzugt durch ein Element realisiert werden, aber auch als separate Elemente ausgebildet sein können.

Die Halbschalen können im Wesentlichen aus Metall gefertigt sein. Eine Fertigung aus Metall hat den Vorteil, dass Metall bereits elektrisch leitend ist und somit keine Nachbearbeitung notwendig ist, um eine elektrische Leitfähigkeit zu erzielen. Die Halbschalen können dafür aus einem Vollmaterial bspw. durch zerspanende Verfahren gefertigt werden oder aus Halbzeugen oder durch entsprechende Gussverfahren, die jeweils nachbearbeitet werden.

Alternativ kann ein Grundkörper der Halbschalen der Hohlleiter aus einem Kunststoff gefertigt sein. Dieser ist als Trägermaterial bestens geeignet und kann durch eine Metallisierung geeigneter Dicke und Oberflächengüte auch elektrisch leitend ausgebildet sein. Die Kunststoffteile können bspw. durch ein Spritzgussverfahren, oder in einem Strangpressverfahren gefertigt sein und - je nach Anforderungen an die Maßhaltigkeit der Teile - vor Aufbringen der Metallisierung bspw. mittels spanender Verfahren nachbearbeitet werden.

In einer Ausgestaltungsform werden die aus einem Kunststoff gefertigten Halbschalen mittels metallischer Passstifte verbunden.

Kunststoffe sind häufig schlecht wärmeleitend, daher kann durch die Verwendung von Kunststoff als Grundkörper eine besonders gute Temperaturentkopplung zwischen der Antenne und der Hochfrequenzeinheit erreicht werden. Besonders geeignete Kunststoffe sind Polyetheretherketon (PEEK), Polyoxymethylene (POM) und Polyvinylidenfluorid (PVDF). Diese Kunststoffe weisen eine gute chemische und thermische Beständigkeit sowie geeignete HF-Eigenschaften auf.

Die Metallisierung der Halbschalen kann bspw. durch Sputtern oder Bedampfen, oder eine Gasphasenabscheidung erfolgen.

Häufig müssen Radarmessgeräte in Prozessumgebungen mit hohen Prozesstemperaturen von mehreren Hundert Grad eingesetzt werden. Um die gegen hohe Prozesstemperaturen empfindliche Elektronik vor diesen hohen Temperaturen zu schützen, ist es vorteilhaft, den Abstand zwischen der heißen Prozessumgebung und der Elektronik zu vergrößern. In einer Ausgestaltungsform weist der Hohlleiter daher eine Länge von wenigstens 4 cm, bevorzugt mehr als 5 cm, weiter bevorzugt mehr als 10 cm, insbesondere über 15 cm, über 20 cm oder über 30 cm auf.

Besonders vorteilhaft ist die zuvor beschriebene Ausgestaltung eines Hohlleiters mit zwei Halbschalen, wenn der Hohlleiter ein Verhältnis von Länge zu kleinster Erstreckung im Querschnitt des Hohlleiters, d. h. kleinster Erstreckung des Hohlleiterkanals, von größer als 30, vorzugsweise größer als 80, weiter bevorzugt größer als 100, insbesondere größer als 150, insbesondere größer als 300 aufweist. Für Hohlleiter, bei denen dieses Verhältnis groß ist, bspw. wie zuvor beschrieben, einen Wert über 30 oder über 80 aufweist, treten die Vorteile bei der Fertigung besonders hervor, da eine Fertigung mittels Tieflochbohrverfahren, nicht mehr möglich oder sehr kostenintensiv ist.

Als kleinste Erstreckung im Querschnitt soll bei Rundhohlleitern mit kreisförmigem Querschnitt der Durchmesser und bei Rechteckhohlleitern mit einem rechteckigen Querschnitt die Länge der kürzeren Kante verstanden werden.

Eine bessere Signalqualität des abgestrahlten Radarsignals kann erreicht werden, wenn eine Dämpfung des von der Hochfrequenzeinheit abgestrahlten Signals in dem Hohlleiter möglichst gering ist. Die Dämpfung eines Hohlleiters nimmt aber mit zunehmender Frequenz zu.

Die Ursache für die zunehmende Dämpfung im Hohlleiter ist der Skin Effekt. Die Eindringtiefe der Ladungsträger in die Wände der Hohlleiter wird bei größer werdenden Frequenzen zunehmend kleiner. Dadurch wird die Oberflächenrauheit der metallischen Oberfläche innerhalb des Hohlleiterkanals mit steigernder Frequenz zunehmend relevanter. Je größer die Rauheit der Oberfläche ist, desto größer wird die Dämpfung des Hohlleiters. Bei steigender Frequenz verringert sich damit nicht nur, wie oben beschrieben, der Durchmesser des Hohlleiters, sondern es steigen auch die Anforderungen an die Güte der Oberfläche innerhalb des Hohlleiterkanals, also insbesondere an die Rauheit, was die Herstellung solcher Wellenleiter teuer macht.

Es ist daher für die Signalqualität vorteilhaft, wenn eine Innenwandung des Hohlleiters einen Mittenrauwert von weniger als 0,5 µm, vorzugsweise weniger als 0,1 µm aufweist.

Unter der Innenwandung des Hohlleiters wird in der vorliegenden Anmeldung die den Hohlleiterkanal begrenzende Wandung verstanden.

Der Mittenrauwert ist nach DIN EN ISO 4287:2010 genormt. Zur Ermittlung dieses Messwertes wird die Oberfläche auf einer definierten Messstrecke abgetastet und sämtliche Höhen- und Tiefenunterschiede der Oberfläche aufgezeichnet. Nach der Berechnung des bestimmten Integrals dieses Rauheitsverlaufes auf der Messstrecke wird abschließend dieses Ergebnis durch die Länge der Messstrecke dividiert.

In einer besonders relevanten Ausgestaltung hat das Radarmessgerät eine Betriebsfrequenz von wenigstens 120 GHz, vorzugweise wenigstens 180 GHz, weiter bevorzugt wenigstens 240 GHz.

Unter der Betriebsfrequenz soll in der vorliegenden Anmeldung die jeweilige Frequenz +/- 20 GHz, vorzugsweise +/- 10 GHz verstanden werden. Je nach regulatorischen Rahmenbedingungen können auch eingere Frequenzbereiche gemeint sein. Typischerweise wird eine auf 10GHz gerundete Mitterfrequenz des von dem Radarmessgerät tatsächlich verwendeten Frequenzbereichs als Betriebsfrequenz angegeben. In einer bevorzugten Ausgestaltung weist der Hohlleiter eine galvanische Trennung auf. Die galvanische Trennung kann bspw. als eine Unterbrechung einer elektrisch leitfähigen Schicht, vorzugsweise einer Metallisierung, des Hohlleiters ausgebildet sein.

Durch die galvanische Trennung wird erreicht, dass die Antenne galvanisch von der Elektronik des Messgeräts getrennt ist.

Als galvanische Trennung wird in diesem Fall eine Trennung zwischen Bezugspotential der Elektronik und den metallischen Teilen der Antenne verstanden. Diese ist notwendig, da ansonsten das Bezugspotential des metallischen Behälters nach Einbau des Radarmessgeräts über den Hohlleiter direkt mit dem Bezugspotential der Sensorelektronik verbunden wäre, was zu Störungen oder sogar zum Ausfall des Geräts führen könnte.

In einer praktischen Ausführungsform weist der Hohlleiter eine Befestigungsvorrichtung auf. Die Befestigungsvorrichtung dient zur Halterung und Fixierung des Hohlleiters innerhalb des Radarmessgeräts und kann den Hohlleiter ferner relativ zur Antenne ausrichten. Die Befestigungsvorrichtung kann bspw. als ein Anschlag für einen Mitnehmer zur Verschraubung oder anderweitigen Befestigung des Hohlleiters ausgebildet sein. Alternativ kann der Hohlleiter selbst ein Gewinde aufweisen, mittels dessen er bspw. mit der Antenne oder einem Teil des Gehäuses verschraubt werden kann.

Mit dem Anschlag kann bspw. ein Druckstück zusammenwirken, das dann gleichzeitig Druck aus dem Prozessraum aufnehmen und die auf den Hohlleiter wirkenden Kräfte auf das Gehäuse ableiten kann.

Erfindungsgemäß ist ferner ein Verfahren zur Herstellung eines Hohlleiters für ein Radarfüllstandmessgerät gemäß einem der vorhergehenden Ansprüche, wobei erfindungsgemäß der Hohlleiter aus zwei Halbschalen gefertigt wird.

In einer Ausgestaltungsform werden die Halbschalen aus einem Metall gefertigt. Die Fertigung der Halbschalen hat den Vorteil, dass Halbschalen aufgrund der Materialwahl so schon elektrisch leitend sind. Allerdings muss bei einer Fertigung aus Metall zusätzlicher Aufwand für eine thermische Entkopplung betrieben werden.

In einer alternativen Ausgestaltungsform des Verfahrens werden die Halbschalen aus einem Kunststoff, insbesondere Polyetheretherketon, Polyoxymethylene oder Polyvinylidenfluorid, gefertigt und metallisiert.

Die vorliegende Erfindung wird nachfolgend anhand von Ausführungsbeispielen unter Bezugnahme auf die beigefügten Figuren eingehend erläutert. Es zeigen:
- Figur 1a: ein aus dem Stand der Technik bekanntes Radarmessgerät (schon behandelt),
- Figur 1b: eine Ausgestaltung eines Radarfüllstandmessgeräts gemäß dem Stand der Technik (schon behandelt),
- Figur 2: ein mögliches Einsatzszenario für Radarmessgeräte als Radarfüllstandmessgerät (schon behandelt),
- Figur 3: schematisch den Aufbau eines Radarmessgeräts gemäß der vorliegenden Anmeldung gemäß einem ersten Ausführungsbeispiel,
- Figur 4: in zwei Teilfiguren zwei mögliche Ausgestaltungsformen für den Hohlleiter aus Figur 3,
- Figur 5: eine Variante für eine galvanische Trennung von Antenne und Elektronik,
- Figur 6: eine Variante für eine galvanische Trennung von Antenne und Behälter,
- Figur 7: eine perspektivische Darstellung des Rechteckhohlleiters aus Figur 4a,
- Figur 8: eine Ausgestaltungsform einer Halbschale eines Hohlleiters, und
- Figur 9: eine alternative Ausgestaltungform zur Montage des Hohlleiters. In den Figuren bezeichnen - soweit nicht anders angegeben - gleiche Bezugszeichen gleiche oder einander entsprechende Komponenten mit gleicher Funktion.

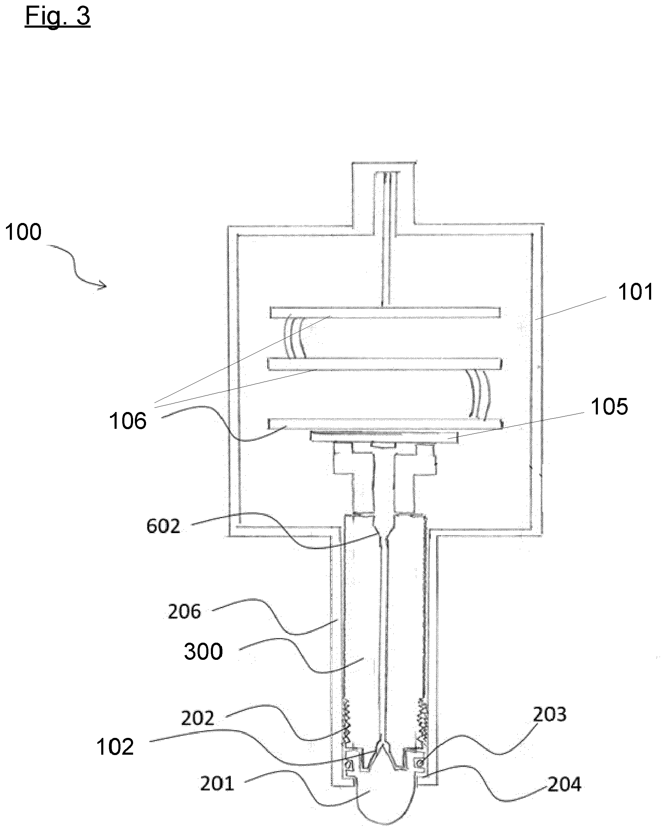

Figur 3 zeigt schematisch den Aufbau eines ersten Ausführungsbeispiels eines Radarmessgeräts 100 gemäß der vorliegenden Anmeldung.

Das Radarmessgerät 100 ist vorliegend als Radarfüllstandmessgerät 100 mit einer Betriebsfrequenz von 110 GHz ausgebildet. In einem Gehäuse 101 des Radarfüllstandmessgeräts 100 sind mehrere Leiterplatten 106 einer Elektronik des Radarfüllstandmessgeräts 100 angeordnet, auf denen unter anderem eine Hochfrequenzeinheit (im weiteren auch als HF-Einheit bezeichnet) 105 zur Erzeugung zum Senden und zum Empfangen von Hochfrequenzsignalen angeordnet ist.

Die HF-Einheit 105 ist derart ausgebildet und angeordnet, dass von ihr erzeugte elektromagnetische Wellen in einen Hohlleiter 300 einkoppeln und über diesen an eine Antenne 102, die vorliegend als Hornantenne ausgebildet ist, weitergeleitet werden. Im vorliegenden Ausführungsbeispiel ist die Hornantenne 102 integral mit dem Hohlleiter ausgebildet, d.h. die Hornantenne ist durch eine trichterförmige Aufweitung des Hohlleiters 300 an einem prozesseitigen Ende des Hohlleiters 300 gebildet.

Die Hornantenne 102 weist eine dielektrische Füllung 201 auf, die zur Fokussierung der abgestrahlten elektromagnetischen Strahlung prozessseitig linsenförmig ausgebildet ist. Im vorliegenden Ausführungsbeispiel ist der Hohlleiter 300 derart ausgebildet aufgrund eines Überdrucks im Behälter 111 auftretende mechanischen Kräfte aufzunehmen. Der Hohlleiter 300 weist dafür im vorliegenden Ausführungseispiel eine Außengewinde 202 auf mittels dem er mit einem Außenrohr 206 des Sensors verschraubt ist. Auf diese Weise wird mittels des Hohlleiters 300 die dielektrische Füllung 201 der Antenne 102 gegen einen Anschlag 204 des Außenrohrs 206 gedrückt und dichtet so das Radarfüllstandmessgerät 100 gegen die Prozessumgebung ab. Zusätzlich weist die Füllung 201 noch eine in einer umlaufenden Nut angeordnete Dichtung 203 in Form eines O-Rings auf, sodass das Eindringen von Prozessmedium in das Radarfüllstandmessgerät 100 effektiv verhindert wird.

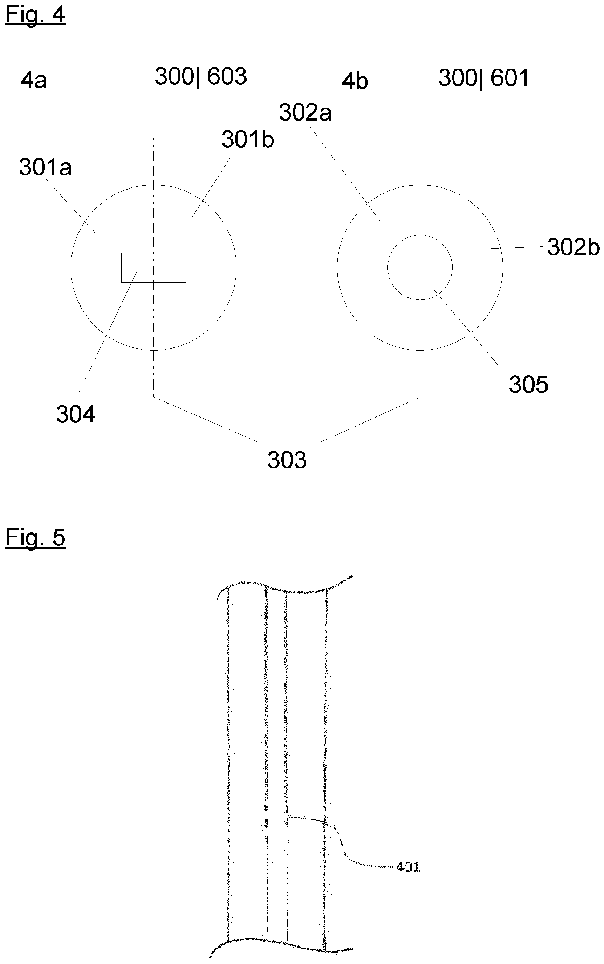

Mögliche Ausgestaltungsformen für den Hohlleiter 300 sind in Figur 4 in den Teilfiguren 4a und 4b gezeigt. Figur 4a zeigt den Querschnitt eines Rechteckhohlleiters 603 und Figur 4b den Querschnitt eines Rundhohlleiters 601. Aus Figur 4 geht klar hervor, dass die Art des Hohlleiters 300, d.h. ob es sich um einen Rechteckholleiter 603 oder einen Rundhohlleiter 601 handelt alleine durch die Querschnittsform der Kavität des Hohlleiters 300, also der Kontur des Querschnitts des Hohlleiterkanals 304, 305 bestimmt wird. Weist der Hohlleiterkanal 304 im Querschnitt eine rechteckige Kontur auf, so spricht man von einem Rechteckhohlleiter 603, weist der Hohlleiterkanal 305 im Querschnitt eine kreisförmige, runde Kontur auf, so spricht man von einem Rundhohlleiter 301. Die Außenkontur des Hohlleiters 300 kann somit bspw. an konstruktive Randbedingungen und/oder eine mechanische Belastung des Hohlleiters 300 angepasst sein.

Der Rechteckhohlleiter 603 gemäß Figur 4a ist aus einer ersten Halbschale 301a und einer zweiten Halbschale 301b gebildet, wobei eine Schnittebene 303 entlang einer Längsachse des Hohlleiters und in dem in Figur 4a gezeigten Querschnitt senkrecht zu einer längeren Kante des Rechtecks des Hohlleiterkanals 304 verläuft. Die Schnittebene teilt das Rechteck des Rechteckhohlleiters 603 in zwei Hälften. Die Schnittebene 303 in der der Hohlleiterkanal geschnitten wird, ist damit parallel zu den kurzen Kanten des Hohlleiterkanals und in der Mitte der langen Kanten. In dieser Ebene sind die auftretenden Wandströme im Hohlleiter 603 gleich Null, was bedeutet, dass ein Übergangswiderstand der durch die Schnittebene 303 entsteht, keine Auswirkung auf die Übertragungseigenschaften des Hohlleiters 603 hat.

In Figur 4b ist ein Rundhohlleiter 601 gezeigt. Der Rundhohlleiter 601 gemäß Figur 4b ist aus einer ersten Halbschale 302a und einer zweiten Halbschale 302b gebildet, wobei eine Schnittebene 303 entlang einer Längsachse des Hohlleiters 601 und in dem in Figur 4b gezeigten Querschnitt senkrecht zu einem Durchmesser des Hohlleiterkanals 305 verläuft. Der Durchmesser der kreisförmigen Kontur in dem gezeigten Ausführungsbeispiel entspricht der Länge der längeren Seite des Rechtecks des Hohlleiterkanals 304 des Rechteckhohlleiters 603 aus Figur 4a.

Die Halbschalen 301a, 301b, 302a, 302b lassen sich sowohl über ein zerspanendes Verfahren als auch über Spritzguss/Druckgussverfahren oder eine Kombination daraus herstellen.

Als Material für die Halbschalen kann wie bereits erwähnt Metall aber auch Kunststoff oder Keramik zum Einsatz kommen. Die Kunststoff- oder Keramikteile müssen, um sie als Hohlleiter verwenden zu können, im Bereich des Hohlleiterkanals metallisiert werden.

Die vorgenannten Herstellverfahren erlauben es Hohlleiter in nahezu beliebiger Länge herzustellen. Um mögliche Fertigungstoleranzen aus dem Spritzguss bzw. Druckgussprozess im Endprodukt zu vermeiden, können die mittels Spritzguss bzw. Druckguss erzeugten Teile bspw. mittels spanender Verfahren nachbearbeitet werden.

Grundsätzlich ist es so auch möglich Rundhohlleiter auf diese Art und Weise herzustellen, wobei aufgrund der Schnittebene 303 aber auch in diesem Fall die Polarisation der elektromagnetischen Welle beachtet werden muss. Grundsätzlich besteht auch die Möglichkeit, Hohlleiter gemäß der vorliegenden Anmeldung durch generative Verfahren, wie bspw. Lasersintern oder 3D-Druck in hinreichender Präzision herzustellen.

Bestehen die Halbschalen 301a, 301b, 302a, 302b aus Kunststoff oder Keramik, ermöglicht das neben geringen Herstellungskosten auch den Vorteil der Temperaturentkopplung von Prozess und Elektronikeinheit. Die Antenne 102 muss so konzipiert sein, dass die hohe Prozesstemperatur von beispielsweise 150°C nicht dazu führt, dass sich die Elektronik, und hier bspw. die HF-Einheit 105 auf über 85°C erwärmt. Aufgrund der im Vergleich zu Metall niedrigen Wärmeleitfähigkeit von Kunststoffen und Keramik können diese Materialien helfen, eine Temperaturentkopplung zwischen Prozess und Elektronik zu optimieren. Als Kunststoff kann beispielsweise Polyetheretherketon (PEEK), Polyoxymethylene (POM) oder Polyvinylidenfluorid (PVDF) verwendet werden. Welcher Kunststoff oder welche Keramik eingesetzt wird hängt von Prozessbedingungen ab und der mechanischen Beanspruchung der Hohlleiter ab.

Bei Verwendung eines Hohlleiters 300 aus Kunststoff oder Keramik gibt es verschiedene Möglichkeiten eine galvanische Trennung zwischen der Elektronik und der Antenne 102 herzustellen. Als galvanische Trennung wird eine Trennung zwischen einem Bezugspotential der Elektronik, insbesondere der HF-Einheit 105 und den metallischen Teilen der Antenne 102 verstanden. Diese Trennung ist obligatorisch, da ansonsten das Bezugspotential beispielsweise des metallischen Behälters 111 nach Einbau des Sensors 101 direkt mit dem Bezugspotential der Sensorelektronik verbunden wäre, was zu Störungen oder sogar zum Ausfall des Radarmessgeräts 100 führen könnte.

Figur 5 zeigt eine erste Möglichkeit für eine galvanische Trennung. Bei dem in Figur 5 gezeigten Hohlleiter 300 ist die Metallisierung der Innenwandung des Hohlleiters 300 für einen Abschnitt 401 unterbrochen, d.h. in diesem Abschnitt ist der nichtleitende Grundkörper des Hohlleiters 300 nicht metallisiert und damit nicht elektrisch leitend. Der Abschnitt 401 darf maximal eine Länge im Bereich weniger Wellenlängen der Betriebsfrequenz des Hohlleiters 300 betragen, da eine durch die Unterbrechung verursachte Dämpfung ansonsten zu dominant wird. In dieser ersten Variante erfolgt die galvanische Trennung also innerhalb des Hohlleiters 300 zwischen der Antenne 102 und der Elektronik.

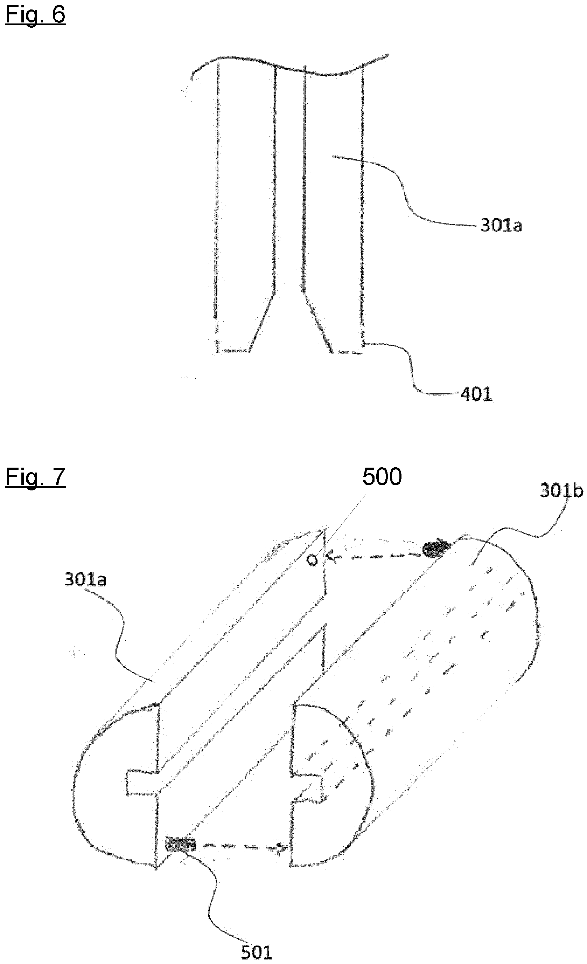

Alternativ kann, wie in Figur 6 gezeigt, die galvanische Trennung beim Übergang in die Antenne 102 realisiert sein, indem der Innenleiter d. h. der Hohlleiterkanal des Hohlleiters 300 und der Übergang zur Antenne 102 komplett metallisiert sind, wohingegen der Teil außerhalb der hochfrequenztechnisch relevanten Fläche im Bereich der Antenne 102 nicht von Metall bedeckt ist. Letzteres Ausführungsbeispiel hat so gut wie keinen Einfluss auf die Hohlleiterdämpfung und ist damit zu bevorzugen. In dieser zweiten Variante erfolgt die galvanische Trennung also beim Eintritt in die Antenne 102, indem eine leitende Verbindung zwischen dem Behälter 111 bzw. dem Außenrohr 206 und der Antenne 102 unterbunden wird.

Figur 7 zeigt den Rechteckhohlleiter 306 aus Figur 4a in einer perspektivischen Ansicht und mit voneinander getrennten Halbschalen 301a, 301b.

Die Halbschalen 301a, 301b weisen jeweils an diagonal gegenüberliegenden Ecken Öffnungen 500, bspw. Bohrungen auf. In jeweils eine der Öffnungen 500 ist im vorliegenden Ausführungsbeispiel ein metallischer Passstift 501 eingesetzt, der beim Zusammenfügen der Halbschalen 301a, 301b in die korrespondierend angeordnete Öffnung 500 der jeweils anderen Halbschale 301a, 301b eingreift, sodass die beiden Halbschalen 301a, 301b zueinander ausgerichtet und miteinander verbunden werden. Da die Kantenlänge der Hohlleiterquerschnittsfläche im Bereich 1 mm und kleiner liegt, verschlechtern selbst kleine Fehlpositionierungen der Halbschalen 301a, 301b die Übertragungseigenschaften des Hohlleiters. Die Öffnungen sind daher automatisiert mittels eines CNC-Verfahrens hergestellt, um möglichst geringe Abweichungen zu gewährleisten.

In einem weiteren Ausführungsbeispiel können an den Hohlleiterhalbschalen 301a, 301b, 302a, 302b bereits Vorrichtungen vorgesehen sein um eine optimale Positionierung der Hohlleiterhalbschalen 301a, 301b, 302a, 302b bei deren Montage zu gewährleisten. Bspw. können entsprechende Öffnungen 500 und/oder Verbindungsstifte bereits bei einem Spritzguss der Halbschale im Werkzeug vorgesehen sein, sodass eine Fehlplatzierung ausgeschlossen werden kann.

Alternativ können die Halbschalen verschraubt, verklebt oder geklipst (Schnappverbindung / Klipverbindung / Rastverbindung) sein. Entweder erfolgt die Ausrichtung dann über diese Verbindung selbst, oder die Halbschalen weisen entsprechende Ausrichtelemente auf, die vor einer mechanischen Verbindung eine Ausrichtung der Halbschalen zueinander gewährleisten.

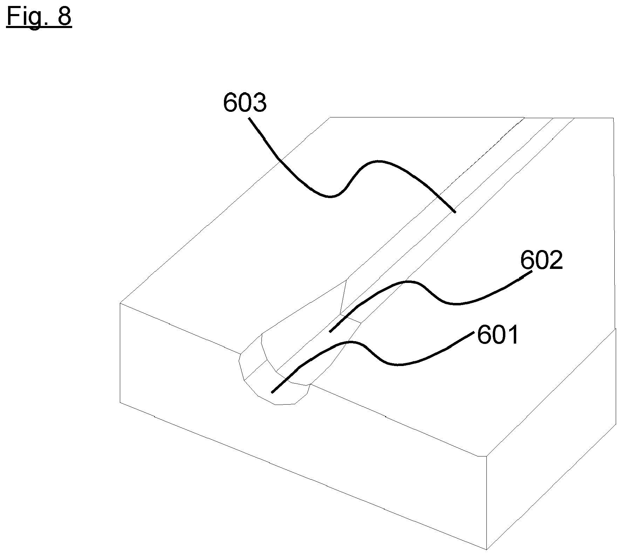

Da die in der Prozessmesstechnik eingesetzten Antennen in der Regel wie in Figur 3 gezeigt als runde Hornantennen 102 ausgeführt sind, werden diese häufig auch über Rundhohlleiter 601 gespeist. Um mit einem Rechteckhohlleiter 603 einen Rundhohlleiter 601 beziehungsweise eine runde Hornantenne 102 zu speisen wird häufig noch ein Übergangsstück 602 benötigt, das die rechteckige Querschnittsfläche in eine runde Querschnittsfläche überführt. Eine solche Halbschale ist in Figur 8 zu sehen.

Figur 8 zeigt eine Ausgestaltungsform einer Halbschale, bspw. der Halbschale 301a des Rechteckhohlleiters 603 aus Figur 4a, bei der der Rechteckholleiter 603 mittels eines Übergangsstücks 602 in einen Rundhohlleiter 601 mit einer runden Kontur zur Speisung einer runden Hornantenne 102 überführt wird. Solche Übergangsstücke können bspw. dann notwendig sein, wenn eine HF-Einheit 105 eine Einkopplung für Rundhohlleiter 601 aufweist, aber bspw. aufgrund einer vereinfachten Herstellung oder geringerer Kosten ein Rechteckhohlleiter 603 zur Überbrückung des Abstands zur Antenne 102 verwendet werden soll und/oder wenn die Antenne 102 eine für Rundhohlleiter ausgelegte Einspeisung aufweist bzw. als Hornantenne mit rundem Querschnitt ausgebildet ist.

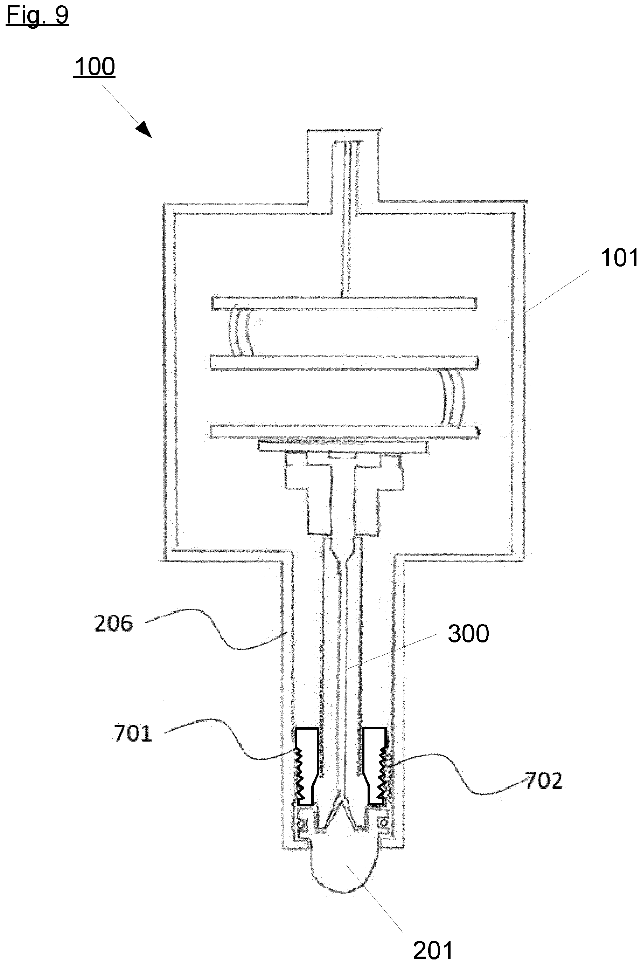

Eine weitere Ausgestaltungform, die eine Aufnahme von Druckkräften aus der Prozessumgebung und Ableitung der Kräfte in das Gehäuse 101 durch den Hohlleiter 300 ermöglicht, ist in Figur 9 gezeigt.

In dieser Ausgestaltungform werden die beiden Halbschalen 301a, 301b durch ein Druckstück 701, das mit einem Außengewinde 702 versehen ist miteinander verpresst und, wie in Zusammenhang mit Figur 3 beschrieben, zusammen mit der Linse 201 gegen ein Widerlager des Außenrohrs 206 gedrückt. Das Druckstück 701 verpresst die beiden Halbschalen 301a, 301b durch eine konische Ausgestaltung von Druckstück 701 und Außenkontur des Hohlleiters 300 mit einander und zentriert diese gleichzeitig im Außenrohr 208 und relativ zueinander. Diese Ausgestaltungform hat den Vorteil, dass die Kraft, die bei einem Überdruck im Behälter 105 auf die Linse drückt, von einem weiteren Teil als dem Hohlleiter 300 aufgenommen und an das Gehäuse 101 abgeleitet wird. Insbesondere bei Hohlleitern 300 mit einem Grundkörper aus Kunststoff oder Keramik ist das von Vorteil. Das Druckstück 701 kann beispielsweise aus Metall gefertigt sein.

Durch dieses Druckstück 701 kann ebenfalls eine Zentrierung der Halbschalen 301a, 30b erfolgen. Eine formschlüssige Verbindung durch Zapfen oder Stifte ist bei dieser Variante nicht zwingend notwendig, da die mechanische Halterung und Zentrierung über das Druckstück 701 erfolgt, kann aber trotzdem zusätzlich vorgesehen sein.

### Bezugszeichenliste

- 100: Radarmessgerät/ Radarfüllstandmessgerät
- 101: Gehäuse
- 101: Sensor
- 102: Hornantenne/ Antenne
- 103: Linse
- 104, 300: Hohlleiter
- 105: Hochfrequenzeinheit
- 106: Leiterplatten
- 107: Hauptkeulen
- 110: Füllgut
- 111: Behälter
- 112: Rührwerk

- 201: dielektrische Füllung
- 202: Außengewinde
- 203: Dichtung
- 204: Anschlag
- 206: Außenrohr

- 300: Hohlleiter
- 301a: erste Halbschale
- 301b: zweite Halbschale
- 302a: erste Halbschale
- 302b: zweite Halbschale
- 303: Schnittebene
- 304, 305: Hohlleiterkanal

- 401: Abschnitt

- 500: Öffnung
- 501: Passstift

- 601, 604: Rundhohlleiter
- 602: Übergangsstück
- 603: Rechteckhohlleiter

- 701: Druckstück
- 702: Außengewinde

## Patentansprüche

1. Radarmessgerät (100) mit einem einer Hochfrequenzeinheit (105) zur Erzeugung und/oder zum Empfang von elektromagnetischen Wellen mit einer Antenne (102) zur gerichteten Abstrahlung der elektromagnetischen Wellen, wobei zwischen der Hochfrequenzeinheit (105) und der Antenne (102) ein Hohlleiter (300) zur Übertragung der elektronmagnetischen Wellen angeordnet ist,
**dadurch gekennzeichnet, dass**
der Hohlleiter (300) aus zwei sich in Längsrichtung des Hohlleiters (300) erstreckenden Halbschalen (301a, 301b, 302a, 302b) besteht.

2. Radarmessgerät (100) gemäß Patentanspruch 1,
**dadurch gekennzeichnet, dass**
der Hohlleiter (300) einen runden Querschnitt aufweist, wobei eine durch die Halbschalen (301a, 301b, 302a, 302b) definierte Trennebene den Hohlleiter (300) in einer Längsrichtung halbiert.

3. Radarmessgerät (100) gemäß Patentanspruch 1,
**dadurch gekennzeichnet, dass**
der Hohlleiter (300) einen rechteckigen Querschnitt aufweist, wobei eine durch die Halbschalen (301a, 301b, 302a, 302b) definierte Trennebene parallel zu den kürzeren Seiten des Rechtecks ist, und dieses halbiert.

4. Radarmessgerät (100) gemäß Patentanspruch 3,
**dadurch gekennzeichnet, dass**
eine Länge einer längeren Seite des Rechtecks kleiner als 2mm, vorzugsweise kleiner als 1mm, insbesondere 1,3mm oder 0,86mm ist.

5. Radarmessgerät (100) gemäß einem der vorhergehenden Ansprüche,
**dadurch gekennzeichnet, dass**
die Halbschalen (301a, 301b, 302a, 302b) Ausrichtelemente, insbesondere selbstzentrierende Ausrichtelemente aufweisen.

6. Radarmessgerät (100) gemäß Patentanspruch 5,
**dadurch gekennzeichnet, dass**
die Ausrichtelemente als Verbindungselemente zum Verbinden der Halbschalen (301a, 301b, 302a, 302b) ausgebildet sind.

7. Radarmessgerät (100) gemäß einem der Patentansprüche 5 oder 6,
**dadurch gekennzeichnet, dass**
Ausrichtelemente und/oder Verbindungselemente einstückig mit den Halbschalen (301a, 301b, 302a, 302b) ausgebildet sind.

8. Radarmessgerät (100) gemäß einem der Ansprüche 5 bis 7,
**dadurch gekennzeichnet, dass**
die Ausrichtelemente und/oder die Verbindungselemente als Öffnungen und zu den Öffnungen korrespondierend angeordnete Stifte, insbesondere Passstifte (501) ausgebildet sind.

9. Radarmessgerät (100) gemäß einem der vorhergehenden Patentansprüche,
**dadurch gekennzeichnet, dass**
der Hohlleiter (300) im Wesentlichen aus Metall gefertigt ist.

10. Radarmessgerät (100) gemäß einem der Patentansprüche 1 bis 8,
**dadurch gekennzeichnet, dass**
der Hohlleiter (300) aus einem Kunststoff als Trägermaterial und einer Metallisierung gebildet ist.

11. Radarmessgerät (100) gemäß einem der vorhergehenden Patenansprüche,
**dadurch gekennzeichnet, dass**
der Hohlleiter (300) eine Länge von wenigstens 4 cm, bevorzugt mehr als 5 cm, weiter bevorzugt mehr als 10 cm, insbesondere über 15 cm, über 20 cm oder über 30 cm aufweist.

12. Radarmessgerät (100) gemäß einem der vorhergehenden Patentanwälte,
**dadurch gekennzeichnet, dass**
der Hohlleiter (300) ein Verhältnis von Länge zu kleinster Erstreckung im Querschnitt des Hohlleiters (300) von größer als 30, vorzugsweise größer als 80, weiter bevorzugt größer als 100, insbesondere größer als 150, insbesondere größer als 300 aufweist.

13. Radarmessgerät (100) gemäß einem der vorhergehenden Patentansprüche,
**dadurch gekennzeichnet, dass**
eine Innenwandung des Hohlleiters (300) einen Mittenrauwert von weniger als 0,5 µm aufweist.

14. Radarmessgerät (100) gemäß einem der vorhergehenden Patentansprüche,
**dadurch gekennzeichnet, dass**
das Radarmessgerät (100) eine Betriebsfrequenz von wenigstens 120 GHz, vorzugweise wenigstens 180 GHz, weiter bevorzugt wenigstens 240 GHz aufweist.

15. Radarmessgerät (100) gemäß einem der vorhergehenden Patentansprüche,
**dadurch gekennzeichnet, dass**
der Hohlleiter (300) eine galvanische Trennung aufweist, insbesondere eine Unterbrechung einer elektrisch leitfähigen Schicht, vorzugsweise einer Metallisierung.

16. Radarmessgerät (100) gemäß einem der vorhergehenden Ansprüche,
**dadurch gekennzeichnet, dass**
der Hohlleiter (300) eine Befestigungsvorrichtung aufweist, insbesondere einen Anschlag (204) für einen Mitnehmer und/oder ein Gewinde.

17. Verfahren zur Herstellung eines Hohlleiters (300) für ein Radarfüllstandmessgerät gemäß einem der vorhergehenden Ansprüche,
**dadurch gekennzeichnet, dass**
der Hohlleiter (300) aus zwei Halbschalen (301a, 301b, 302a, 302b) gefertigt wird.

18. Verfahren gemäß Patentanspruch 17,
**dadurch gekennzeichnet, dass**
die Halbschalen (301a, 301b, 302a, 302b) aus einem Metall gefertigt werden.

19. Verfahren gemäß Patentanspruch 17,
**dadurch gekennzeichnet, dass**
die Halbschalen (301a, 301b, 302a, 302b) aus einem Kunststoff, insbesondere Polyetheretherketon, Polyoxymethylene oder Polyvinylidenfluorid, gefertigt und metallisiert werden.
